# EUROPÄISCHE PATENTSCHRIFT

(11) **EP 1 567 385 B1**
(45) Veröffentlichungstag und Bekanntmachung des Hinweises auf die Patenterteilung: **16.07.2008**
(21) Anmeldenummer: 03780094.3
(22) Anmeldetag: 01.12.2003
(51) Int. Cl.: B60K 37/00, B62D 25/14, B29C 70/48

(54) **INSTRUMENTENTAFEL SOWIE VERFAHREN ZU DEREN HERSTELLUNG**
CONTROL PANEL AND METHOD FOR THE PRODUCTION THEREOF
TABLEAU DE BORD ET PROCEDE DE REALISATION

(30) Priorität: 02.12.2002 DE 10257161
(43) Veröffentlichungstag der Anmeldung: 31.08.2005
(60) Teilanmeldung: 07076096.2
(73) Patentinhaber: Faurecia Innenraumsysteme GmbH, 76767 Hagenbach (DE)
(72) Erfinder: BRAUN, Marco, 76848 Lug (DE); DOLL, Volker, 76829 Ranschbach (DE); KOBER, Steve, 08233 Treuen-Schreinersgrün (DE); MAIER, Thomas, 76131 Karlsruhe (DE); THÖRES, Dieter, 76149 Karlsruhe (DE)
(74) Vertreter: Pfenning, Meinig & Partner GbR
(86) Internationale Anmeldenummer: PCT/EP2003/013509
(87) Internationale Veröffentlichungsnummer: WO 2004/050409

(56) Entgegenhaltungen:
- US-A- 4 455 338
- US-A- 5 273 597
- US-A- 5 564 515

## Beschreibung

Die vorliegende Erfindung betrifft eine Instrumententafel sowie ein Verfahren zu deren Herstellung.

Es sind verschiedene Ausführungsformen von Instrumententafeln für Kraftfahrzeuge bekannt.

Üblicherweise sind Instrumententafeln z.B. auf einem zwischen den A-Säulen eines Kraftfahrzeuges angeordneten Querträger befestigt. Hierzu weisen die Instrumententafeln selbst meist noch eine zusätzliche Trägerstruktur auf, auf welchem sich eine Hülle aus meist spritzgegossenem Kunststoff abstützt, welche fahrzeuginnenraumseitig mit einer Dekorschicht belegt sein kann.

Der Nachteil von diesen bekannten Instrumententafeln liegt darin, dass diese aufgrund ihres oben geschilderten Aufbaus recht gewichtsintensiv sind und trotzdem angesichts der sie angreifenden Lasten stellenweise trotzdem unterdimensioniert oder überdimensioniert sind, so dass es z.B. zu ungewünschten Brüchen der Instrumententafel bei einer Kollision kommen kann. Besonders wesentlich ist allerdings der Gewichtsaspekt, wobei der übliche Querträger außerdem für ein hohes Fahrzeuggewicht sorgt, da er allein z.B. 6 - 8 kg schwer sein kann.

Zur Versteifung der Instrumententafel ist es bisher üblich gewesen, stellenweise flächige Verstärkungen anzubringen, etwa an besonders belasteten stellen wie Airbagdurchgangsöffnungen etc. Hierdurch ergibt sich allerdings das Problem, dass die Anbindung von z.B. Metallverstärkungsblechen an ein Kunststoffteil relativ aufwendig sein kann. So kann außerdem z.B. durch den unterschiedlichen Wärmeausdehnungskoeffizienten des Metallbleches sowie des daran anliegenden Kunststoffes es zu Verwölbungen in der Instrumententafel kommen, welche fahrerraumseitig sichtbar sind und somit eine Qualitätseinbuße darstellen.

Die US-A-4455338 zeigt eine Instrumententafel, die eine aus linienförmigen Elementen aufgebaute Rahmenstruktur aufweist, wobei von linienförmigen Elementen begrenzte Bereiche der Rahmenstruktur zumindest bereichsweise mit Kunststoffplattenelementen verschlossen sind wobei die Kunstsoffplattenelemente mit den linienförmigen Elementen stoffschlüssig verbunden sind und die linienförmigen Elemente aus einem Fasermaterial bestehen. Nicht offenbart ist das Merkmal, dass die linienförmigen Elemente mit demselben thermoplastischen Kunststoff getränkt sind, aus dem die Kunststoffplattenelemente bestehen.

Die US-A-5273597 zeigt eine Instrumententafelanordnung für Kraftfahrzeuge, bei der ein Kunststoffträger mit einer Deckschicht belegt wird, wobei zwischen Träger und Deckschicht Schaum zur Verbesserung der Haptik angeordnet ist.

Die US-A-5564515 zeigt eine weitere Instrumententafel, die modular aus mehreren Schichten eines Trägers hergestellt ist, beispielsweise, um hierdurch Luftkanäle zu bilden.

Der vorliegenden Erfindung liegt daher die Aufgabe zugrunde, eine Instrumententafel sowie ein Verfahren zu deren Herstellung zu schaffen, welche garantieren, dass einerseits hoch belastbare Instrumententafel gegeben ist und diese außerdem leichtgewichtig, kostengünstig und sicher ist.

Diese Aufgabe wird durch eine nach dem erfindungsgemäßen Herstellungsverfahren erzeugte Instrumententafel gelöst.

Erfindungsgemäß ist ein Verfahren zur Herstellung einer Instrumententafel, bei dem linienförmige Elemente in einen Formraum eines Spritzguss- oder Presswerkzeugs eingelegt werden und anschließend in dem Werkzeug unter Bildung der Instrumententafel mit Kunststoff zumindest bereichsweise umgeben werden, wobei Streifen aus einem Fasermaterial in eine Vertiefung einer ersten Formhälfte des Spritzgusswerkzeuges eingelegt werden und anschließend eine zweite Formhälfte, welche eine zur Vertiefung korrespondierende Auswölbung aufweist, mit der ersten Formhälfte so in Deckung gebracht wird, dass zwischen beiden zumindest bereichsweise ein Spalt verbleibt und anschließend ein Kunststoff in den Formraum eingespritzt wird.

Dadurch, dass bei der erfindungsgemäßen Instrumententafel eine aus linienförmigen Elementen aufgebaute Rahmenstruktur gegeben ist, wobei von linienförmigen Elementen begrenzte Bereiche der Rahmenstruktur zumindest bereichsweise mit Kunststoffplattenelementen verschlossen sind, wobei die Kunststoffplattenelemente mit den linienförmigen Elementen stoffschlüssig verbunden sind, wird eine "integrale" Instrumententafel hoher Stabilität erzeugt.

Die Rahmenstruktur wird hierbei so berechnet, dass die auf die Instrumententafel einwirkenden Kräfte hauptsächlich durch deren geeignete Struktur aufgefangen werden. Hierzu tragen selbstverständlich auch die Kunststoffplattenelemente bei, welche auch zu einer Versteifung der Instrumententafel beitragen, da sie in ihren Randbereichen mit den linienförmigen Elementen stoffschlüssig verbunden sind. Unter stoffschlüssiger Verbindung ist hierbei primär ein Umschmelzen bzw. Anschmelzen von flüssigem Kunststoff an die linienförmigen Elemente gemeint. Alternativ sind unter der stoffschlüssigen Verbindung allerdings auch z.B. Schweißverfahren bzw. weitere Verfahren der "chemischen Verschmelzung", etwa mit Kunststoffharzen gemeint. Die Kunststoffplattenelemente werden hierbei vorzugsweise in einem Spritzgussverfahren als flüssiger Kunststoff in ein entsprechendes Formwerkzeug eingebracht, in welchem die linienförmigen Elemente bereitgestellt sind.

Mit der erfindungsgemäßen Instrumententafel wird somit erstmals eine "ganzheitliche" Verstärkung der gesamten Instrumententafel erreicht, im Gegensatz zu bisher üblichen lediglich lokalen Verstärkungen. Hierbei bietet sich bei der Auslegung der erfindungsgemäßen Rahmenstruktur auch ein besonderes Verfahren an, welches eine auf die Belastung abgestimmte Konstruktion der Instrumententafel ermöglicht.

Zunächst wird hierbei der ganze Cockpitbereich als ein "großer Quader" gesehen. Auf diesen Quader werden die Lasten definiert (z.B. "Missbrauchskräfte", wie sie bei der Airbagauslösung bzw. ein "Mantelrichttest" an dem Lenkrad entstehen können). Dann werden außerdem Bereiche definiert, in denen ein Freiraum liegen sollte, also Bereiche, in denen der Quader "ausgeschnitten" sein muss, um z.B. Fußraum für Fahrzeuginsassen zu schaffen. Dort kann sich dann keine Struktur befinden. Bei der dann stattfindenden Auslegung der Profile wird der Hauptkraftfluss im verbleibenden Quader bestimmt. Hieran wird ein angepasstes "Gitterprofil" modelliert. Entlang dieser Gitterlinien werden dann linienförmige Elemente einer Rahmenstruktur angeordnet. Zusätzlich wird in den Bereichen zwischen den linienförmigen Elementen bzw. "Kraftflusslinien" überspannende Bereiche vorgesehen, hier die erfindungsgemäßen Kunststoffplattenelemente. Auf diese Art wird eine optimierte Trägerstruktur erhalten, welche lediglich dort existiert, wo sie aus Kräftegründen wirklich nötig ist. Vorteilhaft hieran ist, dass Verstärkungen sich dann nur dort befinden, wo sie tatsächlich gebraucht werden, durch die optimierte Auslegung Gesamtgewicht des Kraftfahrzeuges eingespart wird, unter Umständen sogar ein Querträger sich einsparen lässt, sich Kosten einsparen lassen und mehr Bauraum zur Verfügung steht. Hierdurch wird mehr nutzbarer Raum im Cockpitbereich erzeugt, z.B. für Klimagerät, Elektronikkomponenten, Ablageboxen; dadurch entsteht ein höherer Gestaltungsspielraum beim Entwurf der Instrumententafel.

Das erfindungsgemäße Verfahren zur Herstellung einer Instrumententafel sieht unter anderem vor, dass linienförmige Elemente in einem Formraum eines Spritzguss-, Press-
oder Schäumwerkzeuges eingelegt werden und anschließend in dem Werkzeug, unter Bildung der Instrumententafel, mit Kunststoff (welcher primär die späteren Kunststoffplattenelemente bildet) zumindest bereichsweise umgeben werden. Bei den erfindungsgemäßen Spritzgussverfahren findet hierbei eine Umschmelzung der linienförmigen Elemente statt, bei Abkühlung des Spritzgusskunststoffes ergibt sich eine stoffschlüssige Verbindung, ähnliche Verhältnisse werden bei einem Presswerkzeug erreicht. Bei einem Schäumwerkzeug wird z.B. mittels mehrerer Komponenten ein Schäumvorgang in Gang gebracht, wodurch z.B. eine PU-Schaum-Ausschäumung des Werkzeuges bzw. seines Formraums stattfindet, diese umgibt zumindest bereichsweise auf die linienförmigen Elemente, so dass auch hier eine stoffschlüssige Verbindung zwischen linienförmigen Elementen und dem ausgeschäumten Kunststoff nach dessen Erhärten entsteht.

Eine erfindungsgemässe Ausbildung der Instrumententafel sieht vor, dass der Querschnitt der linienförmigen Elemente im in der Instrumententafel verbauten Zustand U-förmig ist. Es ist hierbei zu beachten, dass die linienförmigen Elemente im verbauten Zustand zur Führung von Kabeln dienen können. Insbesondere vorteilhaft ist z.B. ein U-Profil, welches zur Außenseite der Instrumententafel hin offen ist, so dass z.B. Kabelstränge von außen leicht zugänglich in dieses U-Profil eingelegt werden können.

Neben Profilen mit einfachen (Endlos-)Querschnittsformen sind auch kompliziertere Strukturen verwendbar, wenn spezielle Aufgabenbereiche erfüllt werden sollen. So ist es z.B. möglich, dass das linienförmige Element ein Streifen einer Bienenwabensandwichstruktur ist. Hierbei werden z.B. mehrere nebeneinander liegende Bienenwaben-Achtecken vorgesehen, welche zwischen zwei Deckplatten eingeschlossen sind. Somit ergibt sich eine sehr leicht bauende Struktur mit sehr guten Festigkeitswerten.

Eine besondere Art, die Anbindung des angespritzten, angeschmolzenen oder umspritzten Kunststoffes an die linienförmigen Elemente zu erreichen, ist z.B., dass die linienförmigen Elemente an ihrer Außenseite spezielle Stege aufweisen. Diese dienen zunächst einmal der Versteifung des linienförmigen Elementes selbst, es ist aber hierdurch auch eine Vergrößerung der Ankoppelfläche an den zu umspritzenden Kunststoff gegeben. Es hat sich gezeigt, dass aus Stabilitätsgründen es besonders günstig ist, die Stege jeweils geneigt (z.B. 45°) zur Hauptverlaufsrichtung des linienförmigen Elementes selbst anzuordnen, um so eine höchstmögliche Stabilität und Einbindung des linienförmigen Elementes in die Instrumententafel zu erreichen.

Als Materialien für die linienförmigen Elemente sind Fasermaterialien vorgesehen. Es können hierbei prinzipiell streifenförmige Gewebe bzw. Gewirke eingesetzt werden, welche erst im Umspritzungsvorgang ihre volle Festigkeit entfalten.

Es ist auch möglich, dass die linienförmigen Elemente aus Endlosfasern verbaut werden. Dies sind z.B. Rohre aus Endlosfasern, als Grundfasern kommen hier Glasfasern oder auch Kohlefasern zur Anwendung, welche z.B. bereits vor dem Verspritzen mit einem thermoplastischen Kunststoff gebunden sind. Durch das anschließende Umspritzen mit dem Kunststoff, welche die späteren Kunststoffplattenelemente bildet, ergibt sich eine besonders gute Verschmelzung dieser linienförmigen Elemente in der Gesamtstruktur.

Die Kunststoffplattenelemente können aus verschiedenen Kunststoffen gebildet sein. Z.B. ist es möglich, dass diese aus einem thermoplastischen Kunststoff gebildet sind, z.B. aus PP30LGF, einem Polypropylen-Werkstoff, welcher Langfaseranteile besitzt. Diese Langfaserteile sind Glasfasern, beim erfindungsgemäßen Spritzgussverfahren haben diese Glasfasern vorzugsweise eine Länge von 10 mm, bei dem erfindungsgemäßen Pressverfahren vorzugsweise eine Länge von 25 mm. Alternative Kunststoffe hierzu sind z.B. Polyamide PA, ABS, PC, ABS/PC, Polyinide, PEEK, PEU, PPS, PEI, PSU, PESU, PPSU und PTFE. Selbstverständlich sind auch andere Kunststoffe, etwa duro-plastische Kunststoffe möglich.

Die erfindungsgemäße Instrumententafel hat den Vorteil, dass sie einen "ganzheitlichen" Ansatz bei der Stabilität der Instrumententafel verfolgt. Es werden keine lediglich lokalen Verstärkungen eingebracht, sondern die Gesamtstruktur hat die angestrebte Steifigkeit. Der erfindungsgemäß gebildete Träger kann zusätzlich, wenn dies aus ästhetischen Gründen gewünscht wird, mit einer zu dem Kraftfahrzeuginnenraum hin angeordneten Dekorschicht belegt sein. Dies kann z.B. eine Slush-Haut, Leder oder auch ein Kunststoffgewebe, Textil, Gießhaut, Sprühhaut sein. Vorteilhaft hierbei ist auf jeden Fall, im Gegensatz zu bekannten Konzepten, dass die Dekorschicht direkt auf eine tragende Struktur geklebt werden kann, es sind keine zusätzlichen Bauelemente, wie etwa Querverstrebungen zwischen einem Querträger eines Kraftfahrzeuges und einer tragenden Kunststoffhaut für die Dekorschicht nötig.

Das erfindungsgemäße Verfahren zur Herstellung einer Instrumententafel hat verschiedene vorteilhafte Ausgestaltungen.

In Bezug auf die Herstellungskosten ist es vorteilhaft, dass die linienförmigen Elemente als Einzelstücke in das Formwerkzeug eingelegt werden. Hierzu können z.B. von einem Endlosmaterial (z.B. einem Rohr aus Fasermaterialien) Stücke abgetrennt werden, welche dann einzeln in das Formwerkzeug eingelegt werden und erst beim Umspritzen mit dem in das Formwerkzeug eingespritzten Kunststoff einen fertigen Rahmen bilden.

Eine besonders vorteilhafte Weiterbildung sieht vor, dass Streifen aus einem Fasermaterial, etwa einem Gewebe, einem Vlies oder dergleichen, in eine Vertiefung einer ersten Formhälfte eines Spritzgusswerkzeuges eingelegt werden und anschließend eine zweiten Formhälfte, welche eine zur Vertiefung korrespondierende Auswölbung aufweist, mit der ersten Formhälfte so in Deckung gebracht wird, dass zwischen beiden zumindest bereichsweise ein Spalt verbleibt und anschließend ein Kunststoff in den Formraum eingespritzt wird. Hierbei wird der Streifen aus Fasermaterial durch das Formwerkzeug selbst (also durch die Vertiefung bzw. die Auswölbung der Formhälften) in die richtige Form gebracht und danach umspritzt. Es ergibt sich hierdurch eine sehr kostengünstige Anordnung, welche stabile Querschnitte der linienförmigen Elemente ermöglicht. Zum besseren Fließen des Kunststoffes im Bereich des eingelegten Streifens ist es vorteilhaft, dass zwischen den korrespondierenden Vertiefungen bzw. Auswölbungen zusätzlich zur Dicke des Streifens nochmals z.B. 2 - 4 mm große Spalträume vorgesehen werden. Die Temperatur des Werkzeuges (also der Formhälften) liegt hierbei etwa auf Höhe der Erweichungstemperatur des zu verspritzenden Kunststoffes, also z.B. ca. 160°C bei Polypropylen. Selbstverständlich ist das entsprechende Verfahren auch in einem Presswerkzeug möglich. Hierbei würde das mit thermoplastischem Kunststoff getränkte Gewebe des Streifens aus Fasermaterial an seine Erweichungstemperatur herangeführt, also etwa auch ca. 160 °C bei Polypropylen. Die Temperatur des Werkzeugs bzw. der Formhälften hätte beim Pressen eine Temperatur von ca. 70°C, um ein befriedigendes Endprodukt zu erhalten.

Die hier gezeigte Erfindung ist insbesondere für Kraftfahrzeuge anwendbar. Es bietet sich hierbei an, dass die kraftaufnehmende Rahmenstruktur der Instrumententafel direkt mit einer Stirnwand und/oder der Kraftfahrzeugkarosserie verbunden ist. Es muss keine Verbindung zu einem Querträger hergestellt werden, um die Instrumententafel abzustützen. Es kann sogar durch entsprechend starke Auslegung der Rahmenstruktur erreicht werden, dass auf den Querträger verzichtet werden kann und somit weiteres Gewicht gespart wird.

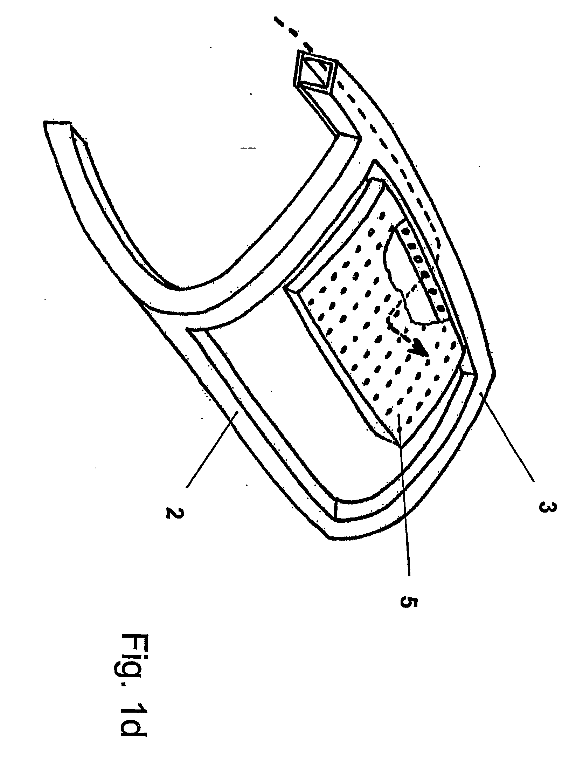

Die Rahmenstruktur könnte zur Luftführung oder Kabelführung dienen. Ebenfalls wäre es denkbar, die Rahmenstruktur als Verteiler der Luft in großflächiger Ausströmfelder zu nutzen (s. Fig. 1d).

Die Erfindung wird nun anhand mehrerer Figuren erläutert. Es zeigen:
- Fig. 1a: ein nicht erfindungsgemäße Rahmenstruktur,
- Fig. 1b: eine nicht erfindungsgemäße Instrumententafel,
- Fig. 1c: einen Schnitt gem. Schnittebene A aus Fig. 1b,
- Fig. 1d: eine zur Luftführung dienende Rahmenstruktur mit flächigen Ausströmfeldern im Bereich der Kunststoffplattenelemente,
- Fign. 2a - 2d: verschiedene Ausführungsbeispiele von linienförmigen Elementen im Querschnitt und in der Seitenansicht sowie
- Fig. 3: einen Querschnitt durch ein erfindungsgemäßes Spritzgusswerkzeug zur Herstellung einer erfindungsgemäßen Instrumententafel.

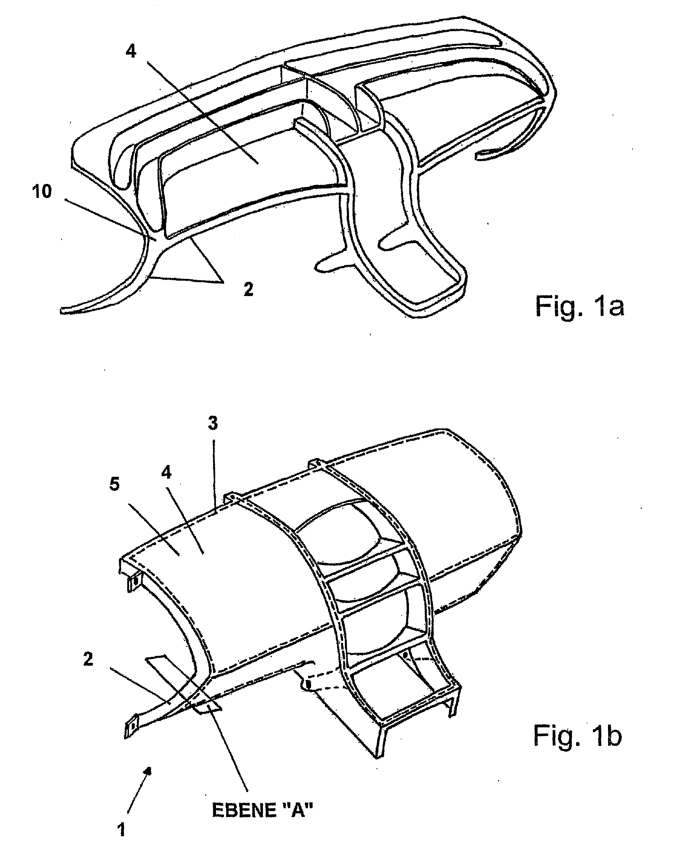

Fig. 1a zeigt eine Rahmenstruktur 3. Diese besteht aus linienförmigen Elementen 2, welche in Eckpunkten 10 zusammengeführt sind. Es sind Bereiche 4 zu sehen, welche von linienförmigen Elementen 2 umgrenzt bzw. eingeschlossen sind. Die in Fig. 1a gezeigte Rahmenstruktur ist die Rahmenstruktur einer Instrumententafel für ein Kraftfahrzeug.

In Fig. 1b ist eine komplette Instrumententafel 1 gezeigt. Diese weist die (in Fig. 1a aus Verständlichkeitsgründen einzeln gezeigte) Rahmenstruktur 3 auf mit linienförmigen Elementen 2. Die von den linienförmigen Elementen 2 begrenzten Bereiche 4 der Rahmenstruktur sind zumindest bereichsweise mit Kunststoffplattenelementen 5 verschlossen. Die Kunststoffplattenelementen sind hierbei mit den linienförmigen Elementen 2 stoffschlüssig verbunden. Die stoffschlüssige Verbindung wurde hier durch das Einspritzen eines thermoplastischen Kunststoffes erreicht, welcher nach seiner Aushärtung die Kunststoffplattenelemente bildet, hierbei kommt es zu einem Anschmelzen bzw. Umschmelzen dieses Kunststoffes an die linienförmigen Elemente, so dass sich eine stoffschlüssige Verbindung ergibt.

Die in Fig. 1b gezeigte Instrumententafel kann zusätzlich mit einer Dekorschicht belegt sein, z.B. einer Schaumfolie, bzw. mit Leder oder einer textilen Dekorschicht.

Die linienförmigen Elemente 2 sind bei der Ausführungsform nach Fig. 1b als U-förmige Endlosteile aus Metallblech ausgeführt.

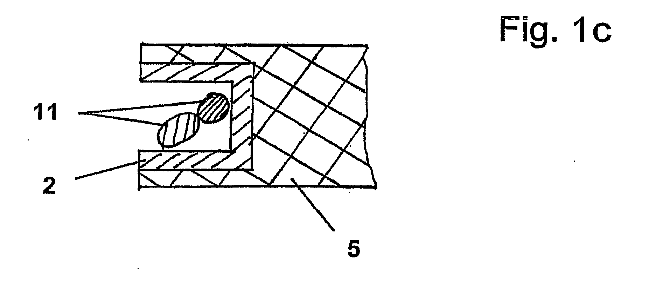

Dies wird durch den in Fig. 1c gezeigten Schnitt gemäß der Schnittebene A sichtbar. Hier ist zu sehen, wie die Kunststoffplattenelemente 5 um den U-förmigen Querschnitt herum gespritzt sind, so dass lediglich die offene Flanke des "U" nach außen hin offen ist. Hierdurch wird es möglich, z.B. Kabel etc. innerhalb des U zu verlegen. Selbstverständlich könne auch nicht dargestellte Verschlusselemente später an der Offenseite des U vorgesehen werden, um ein Herausrutschen der Kabel 11 zu verhindern. Das Kunststoffplattenelement besteht aus einem Polyolefin-Verbundmaterial, hier PP30LFG, also ein Polypropylen mit hierin eingelegten Fasern mit einer Länge von 10 mm (bei Spritzgussverfahren) und 25 mm (beim Pressverfahren).

Fig. 1d zeigt eine aus linienförmigen Elementen 2 aufgebaute Rahmenstruktur 3. Diese Rahmenstruktur hat zumindest bereichsweise innen hohle linienförmige Elemente 2, welche an ihrer seitlichen Anbindung zu den Kunststoffplattenelementen 5 Löcher zur Luftströmung aufweisen. Das Kunststoffplattenelement 5 weist eine Vielzahl von Ausströmöffnungen zum Kraftfahrzeuginnenraum hin auf, so dass die durch die hohlen linienförmigen Elemente 2 zugeführten Luftmassen diffus und flächig aus den Kunststoffplattenelement 5 ausströmen können.

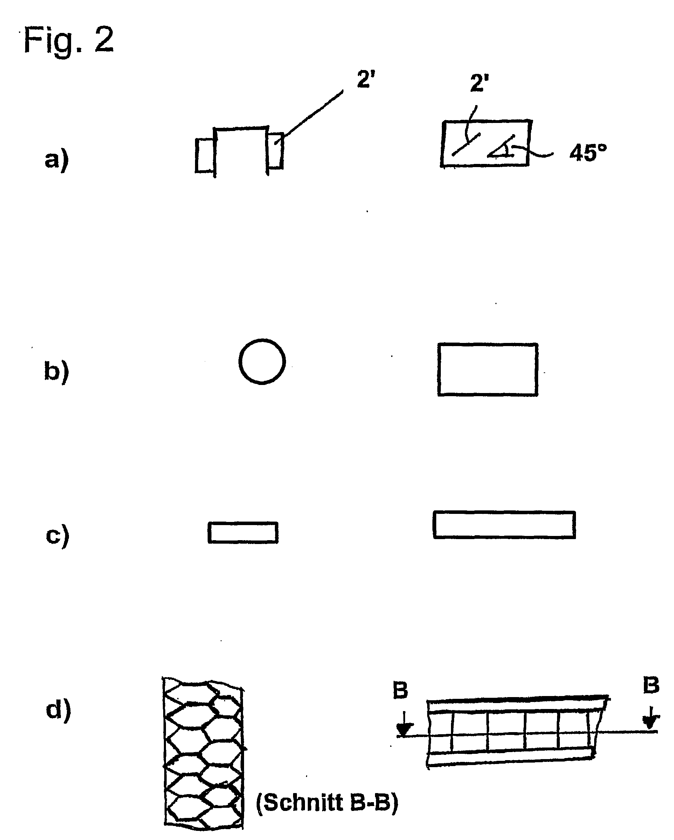

Fig. 2 zeigt verschiedene Möglichkeiten für die Geometrie von linienförmigen Elementen. Hierbei ist jeweils linksseitig der Querschnitt gezeigt und rechtsseitig eine Seitenansicht eines Stückes der jeweiligen Ausführungsform des linienförmigen Elementes.

In Fig. 2a links ist ein U-förmiger Querschnitt gezeigt (wie in Fig. 1c), allerdings mit dem Zusatz, dass beidseitig an den Schenkeln des U noch Stege 2' herausstehen. Aus der Seitenansicht rechts in Fig. 2a wird klar, dass diese Stege geneigt sind, und zwar um etwa 45° gegenüber der Horizontalen. Hierdurch ergibt sich beim Umspritzen mit einem Kunststoffplattenelement eine noch bessere Anbindung des linienförmigen Elementes an das Kunststoffplattenelement 5.

In Fig. 2b ist ein kreisförmiger Querschnitt eines linienförmigen Elementes gezeigt. Aus Fig. 2b rechts wird klar, dass es sich hierbei um ein "Rohrstück" handelt mit gleichbleibendem Außendurchmesser. Dieser Rohrquerschnitt kann z.B. aus Metallblech bzw. gelochtem Metallblech gefertigt sein, es ist selbstverständlich auch möglich, dass es sich hierbei um ein aus Fasern "gewickeltes" Rohr handelt.

In Fig. 2c ist ein Flachquerschnitt gezeigt. Hierbei ist linksseitig der Rechteckquerschnitt des linienförmigen Elementes zu erkennen. Dieses kann aus einem Fasermaterial (gewebt oder als Vlies) bestehen.

Schließlich zeigt Fig. 2d eine Bienenwabensandwichstruktur. Hierbei ist in Fig. 2d rechts eine seitliche Ansicht gezeigt. Hier ist zu sehen, dass senkrecht stehende Bienenwabenzellen (achteckig) zu sehen sind, welche mit einer oberen und einer unteren Deckplatte (diese Platte könnte auch ein in thermoplastischen Kunststoff getränktes Gewebe sein) versehen sind. Dies wird aus dem Schnitt B-B, welcher linksseitig zu sehen ist, nochmals deutlicher.

Die Herstellung der Instrumententafel nach er Erfindung ist auf verschiedene Weisen möglich. Besonders einfach ist es hierzu, dass linienförmige Elemente in einen Formraum eines Spritzgusswerkzeuges eingelegt werden und anschließend in dem Spritzgusswerkzeug, unter Bildung der Instrumententafel, mit Kunststoff zumindest bereichsweise umschmolzen werden.

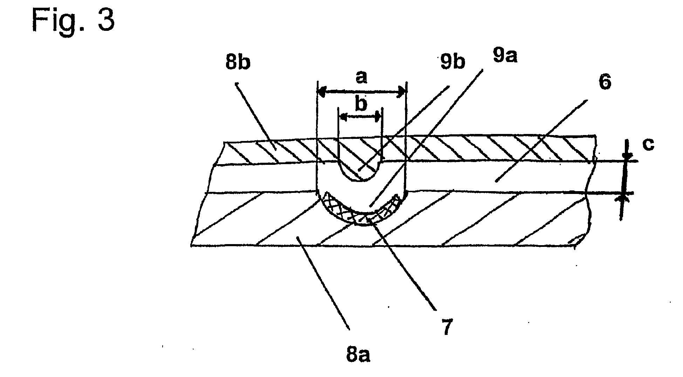

In Fig. 3 ist schematisch der Querschnitt eines Spritzgussformwerkzeuges gezeigt. Dieses weist eine erste Formhälfte 8a und darüberliegend eine zweite Formhälfte 8b auf. Zwischen diesen Formhälften ist ein Formraum 6 gegeben, welcher eine Spalthöhe c von 1 - 6 mm hat.

Die erste Formhälfte 8a hat eine im Querschnitt etwa halbkreisförmige Vertiefung 9a. Die zweite Formhälfte 8b hat vertikal fluchtend eine Auswölbung 9b, welche eine komplementäre Form besitzt, allerdings deutlich kleiner ist. Die Vertiefung 9a hat eine Breite im Querschnitt von a, die Auswölbung 9b im Querschnitt eine Breite von b. b ist in Abhängigkeit von c kleiner als a.

Nun ist es möglich, einen aus einem Fasergeflecht (Fasergewebe/Faservlies) bestehenden Streifen 7 entlang der Vertiefung 9a zu legen, so dass dieser im wesentlichen den halbkreisförmigen Querschnitt der Vertiefung 9a annimmt. Daraufhin wird dann die zweite Formhälfte 8b bis auf den Mindestspalt c heruntergefahren. Hiernach kommt es zu einem Spritzguss eines thermoplastischen Kunststoffes in dem Formraum 6, wobei der Streifen 7 getränkt und außerdem in dem Formraum 6 Kunststoffplattenelemente 5 sich bilden. Hierdurch ist auf eine sehr kostengünstige Weise eine erfindungsgemäße Instrumententafel herstellbar.

Die erfindungsgemäße Instrumententafel hat den Vorteil, dass sie aufgrund ihrer Eigenstabilität (d.h. wegen der Rahmenstruktur) deutlich stabiler ist als bisherige Instrumententafeln. Sie kann direkt mit der Stirnwand und/oder der Kraftfahrzeugkarosserie eines Kraftfahrzeuges verbunden sein. Es ist nicht mehr nötig, die erfindungsgemäße Instrumententafel auf einem Querträger des Kraftfahrzeuges abzustützen.

Im Folgenden sollen nochmals besonders wichtige Punkte der Erfindung einzeln betont werden.

Ein besonders wichtiger Aspekt der Erfindung geht dahin, dass mit einem erfindungsgemäßen Träger insbesondere die Stabilität der Instrumententafel erhöht wird, durch den möglichen Verzicht auf einen Querträger werden Leichtbauanforderungen erfüllt.

Dies wird vorzugsweise dadurch erreicht, dass als linienförmige Elemente, z.B. Bündel von Endlosfasern oder Streifen von Mattenmaterial eingelegt werden, wobei das Mattenmaterial als ein- oder mehrschichtig aufgebautes Vlies oder Gewebe ausgestaltet ist. Dem liegt der erfindungsgemäße Gedanke zugrunde, dass es kostenaufwendig und auch gewichtsintensiv ist, eine stabile Instrumententafel überall gleich stark zu gestalten, um so auf jeden Fall auch an der am stärksten belasteten Stelle ausreichende Stabilität zu besitzen.

Als Fasermaterial haben sich mehrere Materialien als besonders vorzugsweise herausgestellt. So ist es z.B. möglich, Streifen aus gewebten Glasfasermatten einzulegen. Diese können z.B. mit einem Thermoplasten vorimprägniert sein oder sogar Thermoplast-Fäden, z.B. Polypropylen-Fäden enthalten, so dass die anschließende Einbindung in Matrixmaterial noch besser erfolgt (solche Produkte sind z.B. bei der Firma "Vetrotex" erhältlich). Das Einlegen solcher Streifen (bzw. "zugeschnittener Matten") mit Öffnungsbereichen, also quasi in "Maskenform" bietet sich insbesondere an, wenn der Träger auch stark auf Torsion belastet werden soll.

Insbesondere zur Aufnahme von Zugbelastung (z.B. bei der Ersetzung eines Querträgers) kann es auch möglich sein, Glas in Endlos-Glasfasern vorzusehen bzw. ganze Bündel von Endlos-Glasfasern. Hier ist das Fasermaterial kein Gewebe bzw. Vlies sondern ein Strang einzelner Fasern, welche eventuell auch karosserieseitig angebunden werden können und somit die Querträgerfunktion übernehmen.

Insbesondere ist also vorteilhaft, dass hier (je nach Belastung) die Wahl des Materials bzw. wie viel von diesem Material verbaut wird, getroffen werden kann.

Hierzu sollen noch einige Beispiele genannt werden. Bei dem Matrixmaterial, welches die erfindungsgemäßen Kunststoffplattenelemente bildet, welche die linienförmigen Elemente zumindest teilweise umschließen, handelt es sich vorzugsweise um ein relativ "stabiles" Material, welches das Fasermaterial zumindest bereichsweise durchdringt und durch diese Verbindung eine extrem stabile aber trotzdem leichtgewichtige Struktur entstehen lässt. Es ist hier im Allgemeinen nicht ausreichend, das Material einfach nur "einzuschäumen", am ehesten ist eine Verbindung mit stabilen Kunststoffen wie Polypropylen (z.B. PP30 mit 30 mm langen Glasfasern verstärktes Propylen (Polypropylen 30 LGF)) möglich, alternativ sind z.B. auch verstärkte oder unverstärkte Polyamide möglich. Hierbei sollte der Zug-E-Modul des Matrixmaterials vorzugsweise mehr als 2000 N/m², besonders vorzugsweise über 3500 N/m² betragen. Für besonders extreme Anwendungen ist allerdings auch möglich, Material mit E-Modulen von 22000 N/m² und größer zu erreichen, hier kommen z.B. Sandwich-Aufbauten aus mehreren Schichten Glasfasermatten mit unterschiedlichen Trennschichten zum Einsatz.

Bei der Verbindung des Fasermaterials mit dem Matrixmaterial sind auch unterschiedliche Verbindungsmöglichkeiten gegeben.

Bei nicht so hoch belasteten Teilen kann es z.B. ausreichend sein, in eine Form (wie sie z.B. in Fig. 3 gezeigt ist) durch Spritzgießen Schmelze von PP30 LGF einzubringen, allerdings wird durch den Spritzgussprozess hierbei eine Faserverkürzung stattfinden, welche die Stabilität eher negativ beeinflusst.

Alternativ hierzu ist es selbstverständlich auch möglich, in eine entsprechende zweiteilige Form die Schmelze direkt aus dem Extruder z.B. in Form von Strängen abzulegen und dann die Form zusammenzupressen, wobei die Durchdringung des Fasermaterials mit dem Matrixmaterial stattfindet (dieses Verfahren ist als "Strang ablegen" bekannt). Prinzipiell kommen erfindungsgemäß sämtliche Methoden zum Einsatz, bei denen z.B. in einer geschlossenen Form ein Streifen von Fasermaterial mit Matrixmaterial verbunden werden kann. Hierbei wird, wie in Fig. 3 gezeigt, durch die Formgebung des Formwerkzeugs die Kontur des Streifens und somit des späteren Bauteils vorgegeben. Es ist hier möglich, in Abweichung von dem in Fig. 3 gezeigten eher kreisförmigen Anordnungen auch eckigere Anordnungen, auch im Querschnitt mehreckige Anordnungen vorzusehen.

Prinzipiell ist es wesentlich, dass bei besonders hohen Belastungen bzw. auf die Art der Belastung zugeschnitten, spezifisches Material verwendet werden kann (z.B. Endlosfasern bei Zugbelastung bzw. räumlich gekrümmtes Mattenmaterial, wenn z.B. eine zusätzliche starke Torsionsbelastung anzunehmen ist).

## Patentansprüche

1. Verfahren zur Herstellung einer Instrumententafel, wobei linienförmige Elemente (2) in einen Formraum (6) eines Spritzguss- oder Presswerkzeugs eingelegt werden und anschließend in dem Werkzeug unter Bildung der Instrumententafel mit Kunststoff zumindest bereichsweise umgeben werden, wobei als linienförmige Elemente Streifen (7), aus einem Fasermaterial in eine Vertiefung (9a, einer ersten Formhälfte (8a) des Spritzgusswerkzeuges eingelegt werden und anschließend eine zweite Formhälfte (8b), welche eine zur Vertiefung korrespondierende Auswölbung (9b) aufweist um die Kontur des Streifens vorzugeben mit der ersten Formhälfte so in Deckung gebracht wird, dass zwischen beiden zumindest bereichsweise ein Spalt (6) verbleibt und anschließend ein Kunststoff in den Formraum (6) eingespritzt wird.

2. Verfahren nach Anspruch 1, **dadurch gekennzeichnet, dass** die linienförmigen Elemente (2) als Einzelstücke eingelegt werden.

3. Verfahren nach Anspruch 1, **dadurch gekennzeichnet, dass** die linienförmigen Elemente als Bündel von Endlosfasern oder als Streifen von Mattenmaterial eingelegt werden, wobei das Mattenmaterial als ein- oder mehrschichtig aufgebautes Vlies oder Gewebe ausgestaltet ist.

4. Instrumententafel, hergestellt in einem Verfahren nach einem der Ansprüche 1 bis 3.

5. Instrumententafel (1), insbesondere für Kraftfahrzeuge, hergestellt in einem Verfahren nach einem der Patentansprüche 1 bis 3, die eine aus linienförmigen Elementen (2) aufgebaute Rahmenstruktur (3) aufweist, wobei von linienförmigen Elementen begrenzte Bereiche (4) der Rahmenstruktur zumindest bereichsweise mit Kunststoffplattenelementen (5) verschlossen sind, wobei die Kunststoffplattenelemente mit den linienförmigen Elementen stoffschlüssig verbunden sind, wobei die linienförmigen Elemente aus einem Fasermaterial bestehen, und mit demselben thermoplastischen Kunststoff getränkt sind, aus dem die Kunststoffplattenelemente bestehen.

6. Instrumententafel nach Anspruch 5, **dadurch gekennzeichnet, dass** der Querschnitt der linienförmigen Elemente im in der Instrumententafel verbauten Zustand U-förmig, oder mehreckig ist.

7. Instrumententafel nach Anspruch 6, **dadurch gekennzeichnet, dass** das linienförmige Element ein Streifen einer Bienenwabensandwichstruktur ist.

8. Instrumententafel nach einem der Ansprüche 5 bis 7, **dadurch gekennzeichnet, dass** die Instrumententafel (1) auf ihrer Oberseite mit einer Dekorschicht im Wesentlichen vollflächig belegt ist.

9. Kraftfahrzeug, enthaltend eine Instrumententafel nach einem der Ansprüche 5 bis 8, **dadurch gekennzeichnet, dass** die Rahmenstruktur (3) direkt mit der Stirnwand und/oder der Kraftfahrzeugkarosserie verbindbar ist.

## Claims

1. A method for manufacturing an instrument panel, with linear elements (2) being laid in a moulding chamber (6) of an injection mould or compression mould and then being surrounded in the mould, at least in regions, with plastics material, forming the instrument panel, with strips (7) of a fibre material being laid in a recess (9a) in a first mould half (8a) of the injection mould as linear elements and then a second mould half (8b), which has a convexity (9b) corresponding to the recess in order to dictate the contour of the strip, being brought into congruence with the first mould half such that a gap (6) remains, at least in regions, between the two, and then a plastics material being injected into the moulding chamber (6).

2. A method according to Claim 1, **characterised in that** the linear elements (2) are laid as individual pieces.

3. A method according to Claim 1, **characterised in that** the linear elements are laid in the form of bundles of filaments or as strips of mat material, the mat material being in the form of a non-woven or woven fabric constructed in one or several layers.

4. An instrument panel, manufactured using a method according to one of Claims 1 to 3.

5. An instrument panel (1), in particular for motor vehicles, manufactured using a method according to one of Claims 1 to 3, which has a frame structure (3) constructed of linear elements (2), regions (4) of the frame structure which are defined by linear elements being closed, at least in regions, with plastics plate elements (5), the plastics plate elements being joined by a substance-to-substance bond to the linear elements, the linear elements being made of a fibre material and being impregnated with the same thermoplastics material from which the plastics plate elements are made.

6. An instrument panel according to Claim 5, **characterised in that** the cross-section of the linear elements as installed in the instrument panel is U-shaped or polygonal.

7. An instrument panel according to Claim 6, **characterised in that** the linear element is a strip of a honeycomb sandwich structure.

8. An instrument panel according to one of Claims 5 to 7, **characterised in that** the instrument panel (1) on its upper surface is covered substantially over its entire surface with a decorative layer.

9. A motor vehicle, containing an instrument panel according to one of Claims 5 to 8, **characterised in that** the frame structure (3) can be connected directly to the end wall and/or the motor vehicle body.

## Revendications

1. Procédé pour la fabrication d'un tableau de bord, des éléments (2) linéaires étant introduits dans un espace de moulage (6) d'un outil de moulage par injection ou d'un outil de moulage par compression et étant entourés ensuite dans l'outil au moins par endroits avec du plastique en formant le tableau de bord, des bandes (7) à base de matériau fibreux étant introduites sous forme d'éléments linéaires dans une cavité (9a) d'une première moitié de moule (8a) de l'outil de moulage par injection et ensuite une seconde moitié de moule (8b), qui présente une courbure (9b) correspondant à la cavité afin de prédéfinir le contour de la bande, étant amenée en recouvrement avec la première moitié de moule de telle sorte qu'une fente (6) reste entre les deux moitiés au moins par endroits et un plastique est injecté ensuite dans l'espace de moulage (6).

2. Procédé selon la revendication 1, **caractérisé en ce que** les éléments (2) linéaires sont introduits sous forme de pièces individuelles.

3. Procédé selon la revendication 1, **caractérisé en ce que** les éléments linéaires sont introduits sous forme de faisceau de fibres continues ou sous forme de bande de matériau natté, le matériau natté étant conçu sous forme d'un non-tissé ou d'un tissu structuré avec une ou plusieurs couches.

4. Tableau de bord, fabriqué dans un procédé selon l'une des revendications 1 à 3.

5. Tableau de bord (1), en particulier pour véhicules automobiles, fabriqué dans un procédé selon l'une des revendications 1 à 3, qui présente une structure de base (3) conçue à base d'éléments (2) linéaires, des zones (4), délimitées par des éléments linéaires, de la structure de base étant fermées au moins par endroits avec des éléments de plaque en plastique (5), les éléments de plaque en plastique étant reliés avec adhésion par matière avec les éléments linéaires, les éléments linéaires étant à base d'un matériau fibreux et étant imbibés avec le même plastique thermoplastique, dans lequél les éléments de plaque en plastique sont formés.

6. Tableau de bord selon la revendication 5, **caractérisé en ce que** la section des éléments linéaires est en forme de U ou polygonale dans l'état monté dans le tableau de bord.

7. Tableau de bord selon la revendication 6, **caractérisé en ce que** l'élément linéaire est une bande d'une structure sandwich alvéolaire.

8. Tableau de bord selon l'une des revendications 5 à 7, **caractérisé en ce que** le tableau de bord (1) est occupé pratiquement sur toute la surface sur son côté supérieur avec une décoration.

9. Véhicule contenant un tableau de bord selon l'une des revendications 5 à 8, **caractérisé en ce que** la structure de base (3) peut être reliée directement à la paroi avant et/ou à la carrosserie du véhicule.
